Europäisches Patentamt

**European Patent Office**

Office européen des brevets

(11) Veröffentlichungsnummer : **0 092 695**
**B1**

(12) **EUROPÄISCHE PATENTSCHRIFT**

(45) Veröffentlichungstag der Patentschrift :
18.06.86

(51) Int. Cl.⁴ : **C 01 B 23/00**, B 01 D 53/04

(21) Anmeldenummer : **83103264.4**

(22) Anmeldetag : **02.04.83**

(54) **Verfahren zur Gewinnung von Edelgasen mit kleinen Atomdurchmessern, insbes. Helium aus Sauerstoff und/oder Stickstoff enthaltenden Gasgemischen.**

(30) Priorität : **21.04.82 DE 3214771**

(43) Veröffentlichungstag der Anmeldung :
**02.11.83 Patentblatt 83/44**

(45) Bekanntmachung des Hinweises auf die Patenterteilung : **18.06.86 Patentblatt 86/25**

(84) Benannte Vertragsstaaten :
**BE DE FR GB NL**

(56) Entgegenhaltungen :
**EP-A- 0 006 320**
**EP-A- 0 045 422**
**DE-A- 2 504 653**
**DE-A- 3 000 191**
**CHEMISCHE TECHNIK, Band 26, Nr. 7, Juli 1974 H. KNOLL "Molekularsiebe - moderne Adsorbenzien", Seiten 391-396 * Bild 3 mit Beschreibung ***

(73) Patentinhaber : **Bergwerksverband GmbH**
**Franz-Fischer-Weg 61**
**D-4300 Essen 13 (DE)**

(72) Erfinder : **Knoblauch, Karl, Dr.**
**Semperstrasse 55**
**D-4300 Essen (DE)**
Erfinder : **Giessler, Klaus**
**Weindorfstrasse 21**
**D-4650 Gelsenkirchen (DE)**
Erfinder : **Harder, Burkhard, Dr.**
**Am Barchenbach 12**
**D-4200 Oberhausen (DE)**

Jouve, 18, rue St-Denis, 75001 Paris, France

## Beschreibung

Die Erfindung betrifft ein Verfahren zur Gewinnung von Edelgasen mit kleinen Atomdurchmessern, insbesondere Helium, aus Sauerstoff oder Stickstoff enthaltenden Gasgemischen, bei denen das Einsatzgasgemisch durch eine Schicht aus einem mikroporösen Adsorptionsmittel, an deren Ende man das reine Edelgas als Produktgas gewinnt, geleitet wird.

Edelgase werden zunehmend in reiner Form oder als Gasgemische bei technischen Prozessen benötigt, wobei die Wirtschaftlichkeit der Edelgasverwendung häufig von der kostengünstigen Möglichkeit der Edelgasrückgewinnung abhängt.

Edelgase enthaltende Gasgemische treten z. B. auf als Schutzgas in der chemischen Industrie, in der Medizin zur Asthmabekämpfung, bei Taucharbeiten als Tauchatmungsgas, bei der Kälteerzeugung, als Schutzgas beim Schweißen, bei der Lecksuche, bei der Ballonfahrt und anderem. Unter Edelgasen mit kleinen Atomdurchmessern werden in erster Linie Helium und Neon verstanden.

Es ist bekannt, für die adsorptive Edelgasrückgewinnung die sogenannte Pressure-swing-Adsorptionstechnik (PSA) zu verwenden. Dabei kommt es entscheidend auf die Fähigkeit des Adsorptionsmittels an, die in dem Einsatzgasgemisch enthaltenen Gase möglichst vollständig zu adsorbieren, um ein möglichst reines Heliumgas von einer Reinheit möglichst größer 99 Vol.-% als Produktgas zu erhalten. Die Auswahl des richtigen Adsorptionsmittels ist deshalb besonders schwierig, weil unterschiedliche Gase sich unterschiedlich gut adsorbieren lassen, es aber nicht darauf ankommt, allein die besonders leicht adsorbierbaren Gase aus dem Einsatzgasgemisch zu entfernen, sondern alle Gaskomponenten, außer dem Edelgas. Diese Schwierigkeit taucht besonders bei Einsatzgasgemischen auf, die Sauerstoff und/oder Stickstoff in beträchtlichem Umfang enthalten, z. B. über 10 Vol.-%.

Aus der De-A-2 504 653 ist ein Verfahren der eingangs genannten Gattung zur Reinigung eines Neon-Helium-Gemisches bekannt, das auch Stickstoff und Sauerstoff enthält, wobei dieses Gemisch durch mikroporöse Adsorptionsmittel mit einem Adsorptionsporendurchmesser zwischen 0,3 und 0,9 nm geleitet wird. Bei diesem Verfahren wird zunächst aus dem Gasgemisch die Hauptmenge des Stickstoffs durch Dephlegmation zwischen 67 und 77 °K entfernt, bevor der Reststickstoff, Sauerstoff und andere Gemischbestandteile, durch Adsorption unter Druck und unter Thermostatieren des Adsorptionsmittels mit flüssigem Stickstoff abgetrennt und schließlich ebenfalls durch Thermostatieren und stufenweise Druckerniedrigung desorbiert werden. Zur Stickstoffabtrennung ist ein Zweistufenprozeß bei diesem Verfahren erforderlich mit entsprechenden Vorrichtungen für die Dephlegmagtion und für die Adsorption nach dem Temperaturwechselverfahren.

Der Erfindung liegt die Aufgabe zugrunde, ein Verfahren zu finden, das es erlaubt, die Edelgasabtrennung in einem Einstufenprozeß, und zwar durch Adsorption, und mit einer hohen Reinheit des Produktgases durchzuführen.

Diese Aufgabe wird bei einem Verfahren der eingangs genannten Gattung durch die im Kennzeichen des Anspruchs 1 aufgeführten Verfahrensschritte gelöst.

Gemäß einer zweckmäßigen Weiterbildung der Erfindung wird ein Adsorptionsmittel mit einem mittleren Adsorptionsporendurchmesser zwischen 0,3 und 0,4 nm, verwendet.

Ein solches Adsorptionsmittel hat den Vorteil, nicht nur die in aller Regel auftretenden Spurenelemente sondern ebenso wirkungsvoll Stickstoff oder Sauerstoff aus dem Einsatzgasgemisch zu entfernen, so daß das die Adsorptionsmittelschicht verlassende Edelgas als Produktgas eine Reinheit höher als 99 Vol.-% aufweist. Bei der bevorzugten Heliumgewinnung, aber auch bei der Neongewinnung, aus dem Einsatzgas wird neben Sauerstoff und Stickstoff auch Argon, $CO_2$ und $CH_4$ häufig in größerem Umfang zu entfernen sein sowie Spuren von CO, $H_2S$, $SO_2$, $NH_3$, Wasserdampf sowie biologische Geruchsstoffe.

Kohlenstoffmolekularsiebe sind für das Verfahren besonders geeignet, da sie mit einem hohen Anteil an den gewünschten Porendurchmessern hergestellt werden können.

Das erfindungsgemäße Verfahren wird bevorzugt bei der Heliumgewinnung aus Tauchatmungsgasen als Einsatzgas eingesetzt; bei diesen können die einzelnen Gaskomponenten in den nachfolgenden Konzentrationen im Einsatzgas vorhanden sein (Angaben in Vol.-%) :

| | |
|---|---|
| $N_2$ | 50-5 |
| Ar | 40-5 |
| $O_2$ | 20-3 |
| $CO_2$ | 1,5-0,2 |
| He | 95-50 |
| $CH_4$ | 5-1 |
| CO | 50 ppm |

sowie Spuren von menschlichen Geruchsstoffen, $H_2S$, $SO_2$, $NH_3$, Schweiß und ähnliche Rückstände.

Vorteilhafte Ausführungen des Verfahrens im Hinblick auf die PSA-Technik ergeben sich aus den Unteransprüchen.

Weitere Vorteile und Ausführungsformen ergeben sich aus der nachfolgenden Beschreibung eines Ausführungsbeispieles anhand der beiliegenden Zeichnung. In der Zeichnung zeigen :

Figur 1 eine Helium-Gewinnungsanlage für Tauchatmungsgas mit vier parallelen Adsorbern ;

Figur 2 einen Schaltplant der Anlage gemäß Fig. 1 ;

Figur 3 Druck-Zeit-Diagramm der vier Adsorber ;

Figur 4 einen Ventilstellungsplan für die vier Adsorber ;

Figur 5 eine Prinzipskizze zur Anwendung der Anlage gemäß Fig. 1 auf einem Schiff.

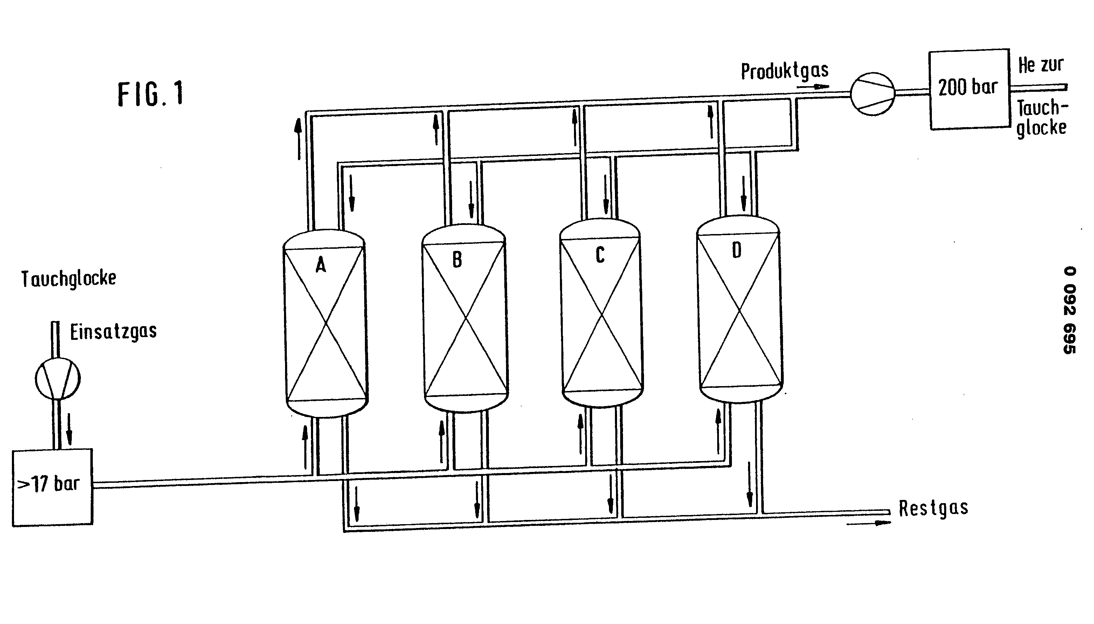

Die Anlage gemäß Fig. 1 besteht aus vier mit Adsorptionsmittel gefüllten Adsorptionsbehältern A bis D in paralleler Schaltung. In jedem Behälter werden nacheinander folgende Phasen durchlaufen: Druckaufbau, Adsorption sowie Regeneration. Durch entsprechende Schaltung der Behälter A bis D ist eine kontinuierliche Heliumgewinnung als Produktgas möglich. Der Druckaufbau erfolgt bevorzugt in zwei Schritten, von denen der erste ein Druckausgleichsschritt ist, in welchem das in einem von Adsorption auf Regeneration umgeschalteten Behälter, z. B. Behälter C, zunächst auf relativ hohem Adsorptionsdruck stehende Druckaufbaugas in einem Behälter, z. B. Behälter A, entspannt wird, in dem anschließend der Druckaufbau beginnen soll. Bei diesem Schritt gelangt überwiegend mit Helium angereichertes Druckaufbaugas in den im Druckaufbau befindlichen Behälter A. Der zweite Druckaufbauschritt erfolgt bevorzugt mit Produktgas, d. h. mit bereits erzeugtem, reinen Helium. In der anschließenden Adsorptionsphase wird der Behälter A mit Einsatzgas durchströmt. Dabei werden die im Einsatzgas enthaltenen Gaskomponenten, wie $O_2$ und $N_2$, adsorbiert, während das Edelgas, hier Helium, den Behälter A als Produktgas in hoher Reinheit verläßt, ohne adsorbiert zu werden.

Spätestens wenn die Adsorptionskapazität des Adsorptionsmittels erreicht ist, wird die Adsorptionsphase beendet und es erfolgt eine Regeneration des Adsorptionsmittels in mehreren Schritten. Zunächst erfolgt dabei der bereits erwähnte Druckausgleich mit einem im Druckaufbau befindlichen Behälter, z. B. Behälter C, daran anschließend wird der sich in der Regenerationsphase befindende Behälter, z. B. Behälter A, auf einen vorgegebenen Druck entspannt und ggf. bei dem erreichten Enddruck einer Spülung mit Produktgas unterzogen. Damit ist ein vollständiger Zyklus abgeschlossen.

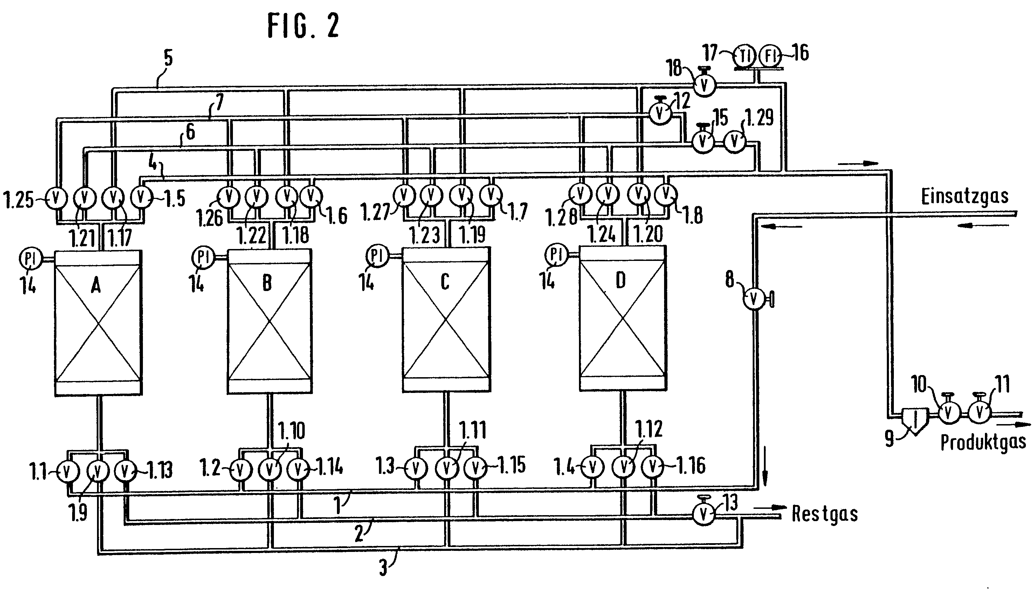

Aus der Fig. 2 geht hervor, wie die vier Adsorptionsbehälter in den einzelnen Zyklen geschaltet werden müssen:

Das Einsatzgas strömt durch eine Einsatzgasleitung 1 in die Adsorptionsbehälter A bis D. Die Gasmenge wird über ein Stellventil 8 geregelt.

Aus den Adsorptionsbehältern A bis D strömt das Produktgas, im Beispiel He, durch eine Produktgasleitung 4 über einen Staubfilter 9, ein Drosselventil 10 und ein Stellventil 11 zum Verbraucher.

Nach erfolgter Beladung eines der Adsorptionsbehälter, z. B. Behälter A, findet anschließend ein Druckausgleich zwischen diesem und einem zweiten Behälter, z. B. Behälter B, über eine Druckaufbaugasleitung 6 und über eine Druckausgleichsleitung 7 und ein Drosselventil 12 statt.

Die danach stattfindende Entspannung auf z. B. atmosphärischen Druck erfolgt über eine Entspannungsgasleitung 2 sowie ein weiteres Drosselventil 13. Der Druckabfall wird durch Manometer 14 angezeigt.

Um einen der Adsorptionsbehälter, z. B. Behälter D, der ein niedrigeres Druckniveau hat, auf den Betriebsdruck zu bringen, wird Druckaufbaugas über die Druckaufbaugasleitung 6 und über ein Drosselventil 15 zugeführt. Der im entspannten Zustand stehende Adsorptionsbehälter, z. B. Behälter C, wird über eine Spülgasleitung 5 mit Produktgas beschickt. Dieses als Spülgas bezeichnete Gas verläßt zusammen mit den desorbierten Komponenten über eine Desorptionsgasleitung 3 die Anlage.

Die Spülgasmenge und -temperatur wird an einem Strömungsmesser 16 mit Temperaturanzeige 17 angezeigt und über ein Drosselventil 18 auf einen konstanten Wert eingestellt.

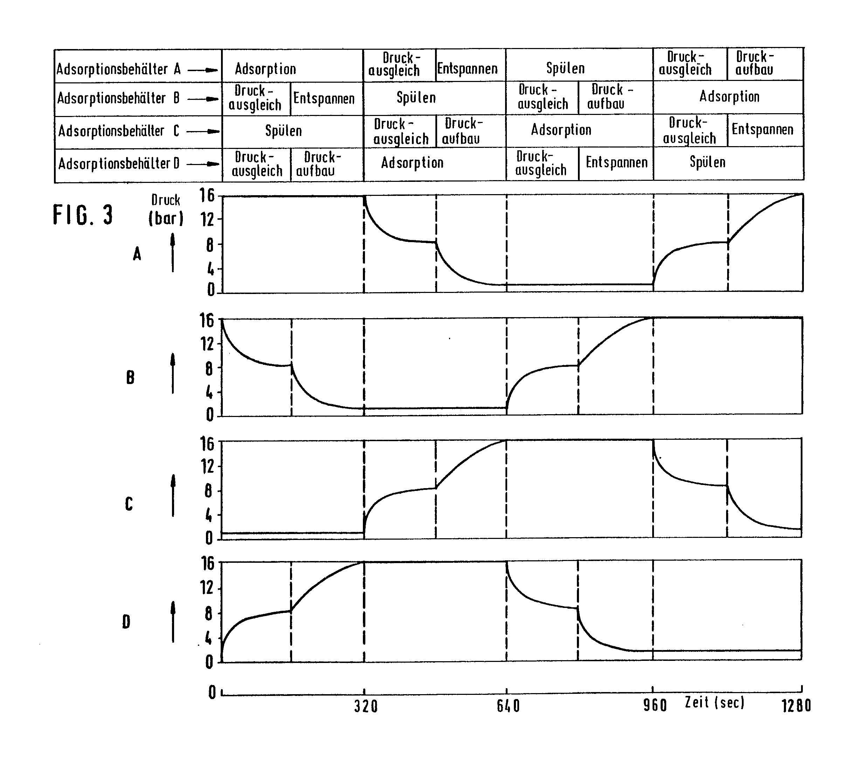

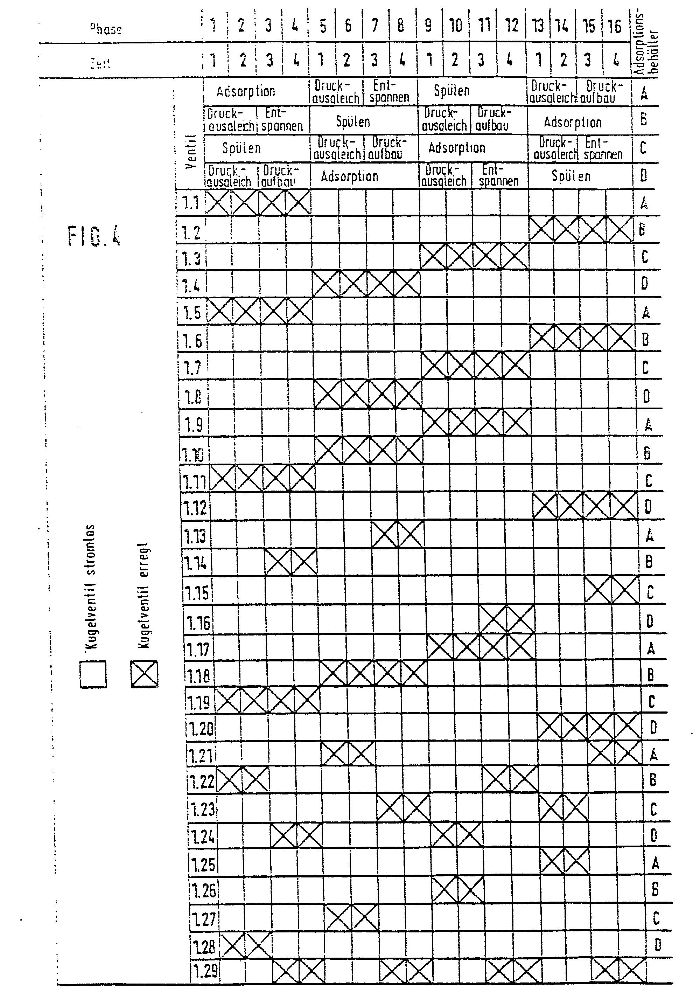

Anhand der Fig. 3, in der die Druck/Zeit-Verläufe für die einzelnen Adsorptionsbehälter A bis D wiedergegeben sind, und des Ventilbestellungsplanes gemäß Fig. 4 werden die Ventilstellungen während eines Zyklusablaufs für den im Schaltplan gemäß Fig. 1 dargestellten Behälter A beispielhaft erläutert:

Das Einsatzgas tritt über die Einsatzgasleitung 1 bei geöffnetem Kugelventil 1.1 in den Adsorptionsbehälter A ein und gereinigtes Helium verläßt den Adsorptionsbehälter A über das Kugelventil 1.5 in die Produktgasleitung 4. — Gleichzeitig wird der Adsorptionsbehälter C mit erzeugtem Helium aus der Spülgasleitung 5 gespült. Hierzu wird Kugelventil 1.19 vor dem Behälter C geöffnet.

Im Anschluß an die Adsorptionsphase im Behälter A wird ein Druckausgleich zwischen den Behältern A und C durchgeführt. Zu diesem Zweck strömt das Druckausgleichsgas über Kugelventil 1.21 aus dem Behälter A in die Druckaufbaugasleitung 6 aus und gelangt über die Druckausgleichsgasleitung 7 und das Kugelventil 1.27 in den Behälter C. In der zweiten Hälfte der Druckausgleichsphase wird der Behälter A auf Atmosphärendruck entspannt, indem Restgas über die Entspannungsgasleitung 2 bei geöffnetem Kugelventil 1.13 entweicht. Dann schließt sich für den Behälter A die Spülphase an. Dazu wird Produktgas über die Spülgasleitung 5 und das Kugelventil 1.17 zugeleitet und verläßt den Behälter A als Restgas über Ventil 1.9 und die Desorptionsgasleitung 3. Anschließend findet ein erster Druckaufbau im Behälter A statt, der in einen Druckausgleich mit Behälter C gebracht wird. Hierzu strömt Gas über das Kugelventil 1.23 aus dem Behälter C in die Druckaufbaugasleitung 6 und gelangt von dort über die Druckausgleichsgasleitung 7 durch das Kugelventil 1.25 in den Behälter A. Im anschließenden weiteren Druckaufbau auf Prozeßgasdruck wird Produktgas über das Kugelventil 1.29 in die Druckaufbaugasleitung 6 eingespeist und über das Kugelventil 1.21 in den Behälter A gedrückt. Anschließend beginnt der Zyklus für die Behälter A und C wie vorbeschrieben von neuem.

Entsprechend laufen die Zyklen für die übrigen Behälter B und D ab, jedoch zeitverschoben, wie dies aus den Fig. 3 und 4 ablesbar ist.

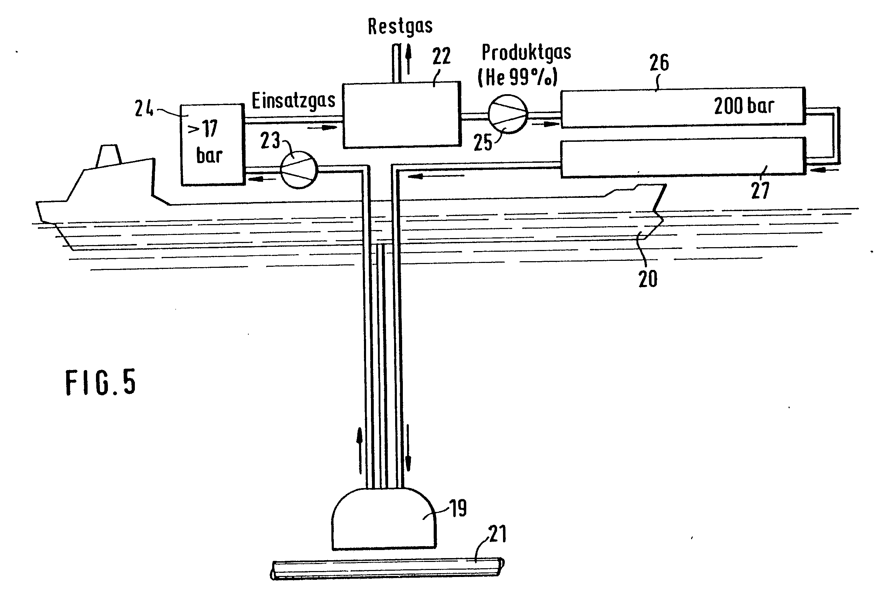

Aus Fig. 5 ist die bevorzugte Verfahrensweise bei der Nutzung des erfindungsgemäßen Verfahrens zur Gewinnung von Helium aus Tauchatmungsgasen als Einsatzgas dargestellt. In einer Taucherglocke 19 arbeiten Taucher in einer auf dem Versorgungsschiff 20 je nach Tauchtiefe und Arbeitsbedingungen zusammengestellten Atmosphäre aus 70 bis 90 % Helium, 3 bis 20 % Sauerstoff, 5 bis 30 % Stickstoff und 0,2 bis 2 % $CO_2$, um z. B. Schweißarbeiten an einem Rohr 21 vorzunehmen. In der Taucherglocke 19 verunreinigt sich das Atemgas, z. B. durch Schweißoperationsrückstände und menschliche Geruchsstoffe ; außerdem verbraucht sich der Sauerstoff. Das Gasgemisch, das nicht mehr als Atemluft Verwendung finden kann, wird ausgetauscht. Das so wieder zum Versorgungsschiff 20 gelangende Einsatzgasgemisch kann z. B. folgende Zusammensetzungen (Angaben in Vol.-%) aufweisen : 70 bis 90 % Helium, 0,2 bis 2 % $CO_2$, 50 ppm CO, Schweißoperationsrückstände, Geruchsstoffe, defizitärer Sauerstoff, 5 bis 30 % Stickstoff sowie Spurenverunreinigungen. Dieses Einsatzgasgemisch wird dann der Druckwechselanlage 22 auf dem Versorgungsschiff 20 zugeführt und vollständig von allen Komponente außer Helium befreit. Das gereinigte Helium wird dann als Produktgas wieder von einer Pumpe 25 einem 200 bar-Heliumspeicherbehälter 26 zugeführt und gelangt von dort in eine Atemluftmischstation 27 zur Erzeugung von frischem Tauchatmungsgas, welches danach wieder in die Taucherglocke 19 gedrückt wird.

Das Einsatzgas, das die Taucherglocke 19 verunreinigt verläßt, hat z. B. als konkrete Zusammensetzung (Angaben in Vol.-%) : 80 % Helium, 9 % Sauerstoff, 10 % Stickstoff, 50 ppm CO, 30 ppm NO und Spuren von Kohlenwassertoff. Dieses Einsatzgasgemisch wird der Druckwechselanlage 22 zugeführt, in welcher die vier Adsorptionsbehälter A bis D einen freien Durchmesser von 0,27 m und eine Adsorptionsmittelschichtlänge von 2,0 m aufweisen und mit einem Kohlenstoffmolekularsieb gefüllt sind, bei dem der mittlere Adsorptionsporendurchmesser 0,35 nm beträgt. Das unter etwa Atmosphärendruck zum Versorgungsschiff 20 zurückgelangende Einsatzgas wird mittels einer Pumpe 23 in einem Druckbehälter 24 auf z. B. 17 bar komprimiert und durchströmt 320 s lang einen der Adsorptionsbehälter A bis D unter Abgabe von reinem Helium als Produktgas. Im Anschluß daran findet ein Druckausgleich mit einem anderen der Adsorptionsbehälter A bis D von 17 auf 8 bar statt, wobei im wesentlichen reines Helium von einem in einen anderen der Adsorptionsbehälter A bis D überströmt. Der Druckausgleich läuft in 140 s ab. Der im Druckaufbau befindliche Adsorptionsbehälter, z. B. Behälter A, wird dann weiter auf 17 bar in 180 s mit bereits gewonnenem, reinen Helium aufgedrückt und geht dann in die Adsorptionsphase, während der in der Regenerationsphase befindliche Adsorptionsbehälter, z. B. Behälter C, in 180 s von 8 bar auf etwa 1,2 bar entspannt wird, wobei das Entspannungsgas verworfen wird. Anschließend wird der entspannte Adsorptionsbehälter mit bereits gewonnenem Produktgas oder mit aus einem Entspannungsschritt von 17 auf 8 bar gewonnenem Helium 320 s lang durchspült. Nach der Spülung erfolgt ein Druckaufbau auf 8 bar mit Gas aus der Entspannung eines Adsorptionsbehälters am Ende seiner Adsorptionsphase während 140 s ; der weitere Drauckaufbau erfolgt mit bereits gewonnenem Helium in 180 s auf den Adsorptionsdruck von 17 bar. Die Gesamtzykluszeit, die ein Adsorptionsbehälter durchläuft, beträgt 1 280 s.

Das Helium kann in einer solchen, aufgrund der Anordnung von vier Adsorptionsbehältern kontinuierlich Helium produzierenden Anlage 22 mit Ausbeuten bis zu 90 % des Heliums im Einsatzgas gereinigt werden. Die Anlage 22 wird mit relativen Produktgasmengen zwischen 45 und 80 $Nm^3$ Helium/h/$m^3$ des Kohlenstoffmolekularsiebes gefahren. Je nach den Auslegungsdaten und der Betriebsweise der Anlage 22 können sehr hohe Heliumreinheiten von besser als 99,9 % erreicht werden, wobei im produktgas etwa 1 000 ppm Stickstoff, 10 ppm Sauerstoff, 1 ppm CO und weniger als 1 ppm übriges Spurengas vorhanden sind. Bei einer geringeren Reinheit von etwa 99 % Helium sind im Produktgas typischerweise bis zu 0,5 % Sauerstoff, bis zu 0,4 % Stickstoff und Argon, 10 ppm $CO_2$ und bis zu 1 ppm Kohlenwasserstoffe vorhanden.

Bei einem weiteren Ausführungsbeispiel betrug die Zusammensetzung des Einsatzgases, das die Tauchglocke 19 verunreinigt verläßt (Angaben in Vol.-%), 89 % Helium, 6 % Stickstoff, 5 % Sauerstoff, 0,05 % $CO_2$, 40 ppm CO, 25 ppm NO und Spuren von Kohlenwasserstoffen. Dieses Einsatzgas wurde einer wie oben beschriebenen Druckwechselanlage 22, die mit einem Molekularsieb mit einem mittleren Adsorptionsporendurchmesser 0,3 nm gefüllt war, zur Reinigung zugeführt.

Dieses Gas wurde bei einem Betriebsdruck von 15,5 bis 16 bar adsorbiert, während der Desorptionsdruck 1,05 bar betrug bei einer Gastemperatur von 30 °C. Zur Erzielung einer Heliumreinheit von besser als 99,5 Vol.-% wurde die vorbeschriebene Anlage 22 mit 1,5 bis 2 Zyklen/h gefahren und dabei eine relative Produktgasmenge von 60 $Nm^3$ Helium/h/$m^3$ des Kohlenstoffmolekularsiebes erzeugt, wobei die Heliumausbeute mindestens 82,5 %, in der Regel aber 87 %, betrug.

Bei einer anderen Abgaszusammensetzung von 72 % Helium, 18 % Stickstoff, 10 % Sauerstoff, 0,05 % $CO_2$ wurden in derselben Anlage bei sonst gleichen Betriebsdaten 3 bis 3,5 Zyklen/h gefahren, bei einer relativen Produktgasmenge von 70 und einer Mindestausbeute von 82 bzw. Normausbeute von 85 % Helium. Als Kohlenstoffmolekularsieb wurde ein Produkt mit einem mittleren Adsorptionsporendurchmesser von 0.25 nm eingesetzt.

## Patentansprüche

1. Verfahren zur Gewinnung von Edelgasen mit kleinen Atomdurchmessern, insbesondere Helium, aus Stickstoff und/oder Sauerstoff enthaltenden Gasgemischen, bei dem das Einsatzgasgemisch durch eine Schicht aus einem mikroporösen Adsorptionsmittel, an deren Ende man das reine Edelgas als Produktgas gewinnt, geleitet wird, dadurch gekennzeichnet, daß das Adsorptionsmittel einen mittleren Adsorptionsporendurchmesser zwischen 0,1 und 0,4 nm aufweist und daß in, vorzugsweise vier, parallel geschalteten Adsorbern die Phasen Druckaufbau, Adsorption und Regeneration durchlaufen werden, bei denen der Druckaufbau zunächst durch Druckausgleich aus einer zu regenerierenden Adsorptionsmittelschicht und dann mit Produktgas erfolgt, während die Regeneration im ersten Schritt mit Druckausgleich aus einem im Druckaufbau befindlichen Behälter beginnt und die anschließende Entspannung und Spülung mit Produktgas erfolgt.

2. Verfahren nach Anspruch 1, dadurch gekennzeichnet, daß das Adsorptionsmittel einen mittleren Adsorptionsporendurchmesser zwischen 0,3 und 0,4 nm aufweist.

3. Verfahren nach Anspruch 1 oder 2, dadurch gekennzeichnet, daß als Adsorptionsmittel ein Kohlenstoffmolekularsieb dient.

4. Verfahren nach Anspruch 3, dadurch gekennzeichnet, daß das Einsatzgasgemisch ein Tauchatmungsgas ist.

## Claims

1. A process for the recovery of rare gases with small atomic diameters, in particular helium, from gas mixtures containing nitrogen and/or oxygen, in which the charge gas mixture is passed through a layer of a microporous adsorption agent, at the end of which the pure rare gas is recovered as a product gas, characterized in that the adsorption agent has an average adsorption pore diameter of between 0.1 and 0.4 nm, and the phases of pressure build-up, adsorption, and regeneration are undergone in preferably four adsorbers arranged in parallel, the pressure build-up taking place first by pressure equalization from an adsorption agent layer to be regenerated and then with product gas, while the regeneration begins in the first stage with pressure equalization from a container subject to pressure build-up and the subsequent pressure release and flushing is carried out with product gas.

2. A process according to claim 1, characterized in that the adsorption agent has an average adsorption pore diameter of between 0.3 and 0.4 nm.

3. A process according to claim 1 or 2, characterized in that as a carbon molecular sieve serves as the adsorption agent.

4. A process according to claim 3, characterized in that the charge gas mixture is a diving respiration gas.

## Revendications

1. Procédé pour l'extraction de gaz rares avec de petits diamètres atomiques, en particulier de l'hélium, de mélanges gazeux contenant de l'azote et/ou de l'oxygène, dans lequel on fait passer le mélange gazeux de départ à travers une couche d'un adsorbant microporeux et obtient à la sortie de celle-ci comme gaz de production le gaz rare pur, caractérisé en ce que l'adsorbant possède des pores d'adsorption d'un diamètre moyen compris entre 0,1 et 0,4 nm et les phases successives de mise sous pression, d'adsorption et de régénération sont réalisées dans des adsorbeurs montés en parallèle, avantageusement au nombre de quatre, la mise sous pression étant réalisée d'abord par égalisation de la pression d'une couche d'adsorbant à régénérer, puis à l'aide de gaz de production, tandis que la régénération débute par une égalisation de la pression à partir d'un réservoir se trouvant dans la phase de mise sous pression, suivie d'une détente et d'un rinçage avec du gaz de production.

2. Procédé suivant la revendication 1, caractérisé en ce que les pores d'adsorption de l'adsorbant possèdent un diamètre moyen compris entre 0,3 et 0,4 nm.

3. Procédé suivant la revendication 1 ou 2, caractérisé en ce que l'adsorbant est un tamis moléculaire carboné.

4. Procédé suivant la revendication 3, caractérisé en ce que le mélange gazeux à traiter est un gaz de respiration provenant d'une cloche de plongée.

FIG. 1

Produktgas

He zur Tauchglocke

200 bar

Tauchglocke

Einsatzgas

A    B    C    D

>17 bar

Restgas

0 092 695

# FIG. 2

| Adsorptionsbehälter A ➞ | Adsorption | | Druck-ausgleich | Entspannen | Spülen | | Druck-ausgleich | Druck-aufbau |
|---|---|---|---|---|---|---|---|---|
| Adsorptionsbehälter B ➞ | Druck-ausgleich | Entspannen | Spülen | | Druck-ausgleich | Druck-aufbau | Adsorption | | |
| Adsorptionsbehälter C ➞ | Spülen | | Druck-ausgleich | Druck-aufbau | Adsorption | | Druck-ausgleich | Entspannen |
| Adsorptionsbehälter D ➞ | Druck-ausgleich | Druck-aufbau | Adsorption | | Druck-ausgleich | Entspannen | Spülen | |

**FIG. 3**

Druck (bar)

A

B

C

D

320    640    960    Zeit (sec)    1280

**FIG. 4**

Kugelventil stromlos ☐
Kugelventil erregt ☒

| Phase | 1 | 2 | 3 | 4 | 5 | 6 | 7 | 8 | 9 | 10 | 11 | 12 | 13 | 14 | 15 | 16 | Adsorptions-behälter |
|---|---|---|---|---|---|---|---|---|---|---|---|---|---|---|---|---|---|
| Zeit | 1 | 2 | 3 | 4 | 1 | 2 | 3 | 4 | 1 | 2 | 3 | 4 | 1 | 2 | 3 | 4 | |
| Ventil | Adsorption | | | | Druck-ausgleich | | Ent-spannen | | Spülen | | | | Druck-ausgleich | | Druckaufbau | | A |
| | Druck-ausgleich | | Ent-spannen | | Spülen | | | | Druck-ausgleich | | Druck-aufbau | | Adsorption | | | | B |
| | Spülen | | | | Druck-ausgleich | | Druck-aufbau | | Adsorption | | | | Druck-ausgleich | | Ent-spannen | | C |
| | Druck-ausgleich | | Druck-aufbau | | Adsorption | | | | Druck-ausgleich | | Ent-spannen | | Spülen | | | | D |
| 1.1 | ☒ | ☒ | ☒ | ☒ | | | | | | | | | | | | | A |
| 1.2 | | | | | | | | | | | | | ☒ | ☒ | ☒ | ☒ | B |
| 1.3 | | | | | | | | | ☒ | ☒ | ☒ | ☒ | | | | | C |
| 1.4 | | | | | ☒ | ☒ | ☒ | ☒ | | | | | | | | | D |
| 1.5 | ☒ | ☒ | ☒ | ☒ | | | | | | | | | | | | | A |
| 1.6 | | | | | | | | | | | | | ☒ | ☒ | ☒ | ☒ | B |
| 1.7 | | | | | | | | | ☒ | ☒ | ☒ | ☒ | | | | | C |
| 1.8 | | | | | ☒ | ☒ | ☒ | ☒ | | | | | | | | | D |
| 1.9 | | | | | | | | | ☒ | ☒ | ☒ | ☒ | | | | | A |
| 1.10 | | | | | ☒ | ☒ | ☒ | ☒ | | | | | | | | | B |
| 1.11 | ☒ | ☒ | ☒ | ☒ | | | | | | | | | | | | | C |
| 1.12 | | | | | | | | | | | | | ☒ | ☒ | ☒ | ☒ | D |
| 1.13 | | | | | | | ☒ | ☒ | | | | | | | | | A |
| 1.14 | | | ☒ | ☒ | | | | | | | | | | | | | B |
| 1.15 | | | | | | | | | | | | | | | ☒ | ☒ | C |
| 1.16 | | | | | | | | | | | ☒ | ☒ | | | | | D |
| 1.17 | | | | | | | | | ☒ | ☒ | | | | | | | A |
| 1.18 | | | | | ☒ | ☒ | ☒ | ☒ | | | | | | | | | B |
| 1.19 | ☒ | ☒ | ☒ | ☒ | | | | | | | | | | | | | C |
| 1.20 | | | | | | | | | | | | | ☒ | ☒ | ☒ | ☒ | D |
| 1.21 | | | | | ☒ | ☒ | | | | | | | | | ☒ | ☒ | A |
| 1.22 | ☒ | ☒ | | | | | | | | | ☒ | ☒ | | | | | B |
| 1.23 | | | | | | | ☒ | ☒ | | | | | ☒ | ☒ | | | C |
| 1.24 | | | ☒ | ☒ | | | | | ☒ | ☒ | | | | | | | D |
| 1.25 | | | | | | | | | | | | | ☒ | ☒ | | | A |
| 1.26 | | | | | | | | | ☒ | ☒ | | | | | | | B |
| 1.27 | | | | | ☒ | ☒ | | | | | | | | | | | C |
| 1.28 | ☒ | ☒ | | | | | | | | | | | | | | | D |
| 1.29 | | | ☒ | ☒ | | | ☒ | ☒ | | | ☒ | ☒ | | | ☒ | ☒ | |

200 bar

Produktgas (He 99%)

Restgas

Einsatzgas

>17 bar

26

27

20

21

19

25

22

23

24

FIG.5